# FASCICULE DE BREVET EUROPEEN

(11) **EP 0 240 387 B1**
(45) Date de publication et mention de la délivrance du brevet: **05.06.1996**
(21) Numéro de dépôt: 87400449.2
(22) Date de dépôt: 02.03.1987
(51) Int. Cl.: B01D 1/00, F22B 1/30, F28F 13/18, H05B 3/60

(54) **Procédé et dispositif de vaporisation rapide d'un liquide**
Verfahren und Vorrichtung zur raschen Verdampfung einer Flüssigkeit
Method and apparatus for the fast evaporation of a liquid

(30) Priorité: 03.03.1986 FR 8602934
(43) Date de publication de la demande: 07.10.1987
(73) Titulaire: ASSOCIATION POUR LA RECHERCHE ET LE DEVELOPPEMENT DES METHODES ET PROCESSUS INDUSTRIELS (ARMINES), F-75272 Paris Cédex 06 (FR)
(72) Inventeur: Desage, Robert, F-78480 Verneuil-sur-Seine (FR)
(74) Mandataire: Bruder, Michel

(56) Documents cités:
- EP-A- 0 011 054
- FR-A- 2 211 268
- FR-A- 2 270 204
- FR-A- 2 341 340
- FR-A- 2 465 959
- US-A- 2 519 515
- US-A- 4 382 173

## Description

La présente invention concerne un dispositif de vaporisation rapide de l'eau.

La plupart de tels dispositifs de vaporisation rapide emploient une ou plusieurs résistances électriques plongées dans un volume d'eau relativement important et présentent, de ce fait, un temps de mise en phase vapeur relativement long et un encombrement relativement grand, ils emploient des systèmes de sécurité pour absence de liquide, ils obligent leur utilisation en position horizontale, ils coûtent relativement cher aussi bien en ce qui concerne leur conception que leur entretien, et ils ont un rendement médiocre, notamment lorsqu'ils sont employés à faible taux d'activité ainsi que du fait des pertes thermiques dues aux surfaces relativement grandes des générateurs de vapeur.

On connaît par ailleurs d'autres types de dispositif de vaporisation rapide de l'eau comportant un corps poreux imprégné de l'eau à vaporiser et des moyens de chauffage électriques pour chauffer le corps poreux et provoquer, dans celui-ci, une vaporisation rapide de l'eau qui migre continuellement dans le corps poreux sous l'effet de sa capacité de pompage et aspiration, par capillarité, en provenance d'une nappe d'eau située à un niveau inférieur à celui du corps poreux et dans laquelle trempe partiellement celui-ci. De tels dispositifs sont décrits, par exemple, dans les brevets FR-A-2 341 340 et FR-A-2 420 731 et FR-A-2 211 268. Ces dispositifs présentent toutefois l'inconvénient de ne pouvoir fonctionner qu'en position horizontale, du fait de la présence permanente de la nappe, d'eau, et de ne pas permettre d'obtenir un profil désiré de variation du débit de la vapeur produite dans le temps.

On connaît par le brevet US-A-2 519 515 un dispositif destiné à vaporiser un produit médicamenteux, ou une composition chimique déterminée, qui est constitué d'une enceinte perforée à sa base qui est immergée dans un bac contenant ledit produit à vaporiser et qui contient un matériau poreux chauffé par une résistance. Ce document n'indique pas les caractéristiques du matériau fibreux utilisé pour obtenir un profil de débit de vapeur déterminé.

La présente invention concerne des perfectionnements apportés à ce type de dispositif, dans le but d'améliorer un certain nombre de ses caractéristiques dont la conséquence est de pouvoir concevoir des produits plus adaptés aux conditions d'utilisation ou à de nouvelles fonctions d'utilisation de la vapeur produite.

L'invention a pour objet un dispositif de vaporisation rapide d'un volume d'eau stocké dans un corps poreux constitué de laine de roche, comportant des moyens de chauffage électrique sous tension constante d'une quantité donnée de l'eau contenue dans le corps poreux, aptes à provoquer sa vaporisation, caractérisé en ce que le diamètre des fibres constituant le corps poreux est compris entre 1,5 µm et 5 µm, la densité du corps poreux étant comprise entre 120 kg/m3 et 140 kg/m3.

Dans un mode de mise en oeuvre de l'invention, les moyens de chauffage du liquide contenu dans le corps poreux fibreux sont constitués d'au moins deux électrodes conductrices, alimentées en courant électrique, et qui sont en contact avec ledit corps poreux fibreux.

Dans un autre mode de mise en oeuvre de l'invention, les moyens de chauffage du liquide contenu dans le corps poreux courant électrique, qui est en contact avec ledit corps poreux fibreux.

Ce corps poreux aura une densité qui est choisie de manière à donner une loi désirée de variation de l'énergie dissipée dans le temps.

Le dispositif suivant l'invention peut être chargé en eau à vaporiser sur toute sa surface ou sur une partie de celle-ci, soit par l'extérieur du corps poreux (par exemple par remplissage, trempage, immersion, arrosage etc..) soit par l'intérieur de ce corps poreux, par chargement de l'eau, par exemple au moyen d'un tube poreux ou perforé engagé dans ce corps poreux, soit encore par effet de pompage/aspiration du corps poreux. Du fait que préférentiellement la masse d'eau à vaporiser est stockée en totalité sous forme imprégnée à l'intérieur du corps poreux, sans pouvoir s'échapper malgré l'effet de la pesanteur, il est possible d'utiliser le dispositif dans n'importe quelle position.

Le corps poreux pourra également-être chargé, en totalité ou en partie, d'un sel conducteur de l'électricité, suivant la résistivité du liquide vaporisé.

Le corps poreux du dispositif peut être réalisé en un seul et même matériau homogène, à savoir la laine de roche, présentant les mêmes caractéristiques dans toutes ses parties, ou bien encore en un matériau présentant des caractéristiques physiques locales différentes, telles que la densité, suivant les nécessités imposées par le but recherché.

De même lorsque l'énergie de chauffage électrique est fournie à l'eau à vaporiser, sous la forme d'un courant électrique passant entre deux électrodes à travers le corps localisées en totalité ou en partie sur la surface du corps poreux et/ou à l'intérieur de celui-ci, ces électrodes étant réalisées en n'importe quel matériau conducteur de l'électricité. Dans le cas où le chauffage électrique du liquide à vaporiser est effectué indirectement, on peut utiliser une source électrique chauffante indépendante qui peut être localisée en tout ou partie à l'intérieur du corps poreux ou à sa surface, en étant en contact avec celle-ci ou à distance de celle-ci.

Le dispositif générateur de vapeur suivant l'invention offre l'avantage d'être d'un prix de revient modique, ce qui permet de l'utiliser notamment dans de petits appareillages ou comme recharge périodique en utilisation prolongée lorsqu'il est saturé de calcaire provenant de l'eau fortement chargée. Par ailleurs il peut être réalisé sous un faible encombrement, il assure une grande rapidité de mise en phase vapeur, et des temps relativement courts de changement de régime du débit de vapeur du fait notamment que l'on peut imposer le passage de fortes densités de flux dans le liquide contenu dans le corps poreux formant réservoir. Egalement la fixation du calcaire contenu dans l'eau vaporisée s'effectue et se répartit dans le volume du corps poreux, et non sur une surface comme dans le cas d'une résistance noyée dans l'eau, ce qui augmente ainsi la durée d'utilisation du dispositif tout en conservant un rendement optimal.

Le dispositif suivant l'invention, peut être appliqué à des appareils portables et déplaçables dans toutes les positions, afin d'utiliser rationnellement la vapeur produite près du lieu de son utilisation, par exemple pour créer des appareils électroportatifs de type manuel ou montés sur des bras d'automates de chaînes automatiques ou encore dans le cas de

Le dispositif suivant l'invention peut être alimenté en courant alternatif ou continu, sous toute tension. Il peut fonctionner à une pression inférieure, égale ou supérieure à la pression atmosphérique et l'on peut obtenir des densités de flux dans une gamme allant de 1W/cm 2 à 1000W/cm 2.

Un dispositif suivant l'invention, à chauffage direct, équipé d'une électrode et d'un système de commande, peut permettre d'obtenir, par exemple, une plage de débit de vapeur dans un rapport de 1 à 3 et de passer d'un débit constant minimal à un débit constant maximal et inversement dans un laps de temps compatible avec des utilisations usuelles.

Le dispositif suivant l'invention peut être appliqué dans des domaines très variés, notamment dans les domaines industriel, ménager, artisanal et du bricolage.

On décrira ci-après, à titre d'exemples non limitatifs, diverses formes d'exécution de la présente invention, en référence au dessin annexé sur lequel :
La figure 1 est une vue en coupe longitudinale et horizontale, avec arrachement partiel, d'un dispositif de vaporisation rapide d'un liquide, suivant l'invention.
La figure 2 est une vue en coupe en élévation de la partie interne du dispositif représenté sur la figure 1.
La figure 3 est une vue de profil, prise de la gauche sur les figures 1 et 2, et partiellement en coupe verticale et transversale.
Les figures 4,5,6 sont des diagrammes illustrant le fonctionnement du dispositif représenté sur les figures 1 à 3.
La figure 7 est une vue en perspective d'une variante de réalisation du dispositif de vaporisation rapide d'un liquide
Les figures 8 et 9 sont des diagrammes illustrant le fonctionnement du dispositif de vaporisation représenté sur la figure 7.
La figure 10 est une vue en perspective d'une autre variante de réalisation du dispositif de vaporisation rapide suivant l'invention.
La figure 11 est une vue en perspective d'une autre variante d'exécution du dispositif.
La figure 12 est un diagramme illustrant le fonctionnement du dispositif de la figure 13.
La figure 13 est une vue en perspective d'une autre variante d'exécution du dispositif.
La figure 14 est une vue en perspective d'une autre variante d'exécution du dispositif.

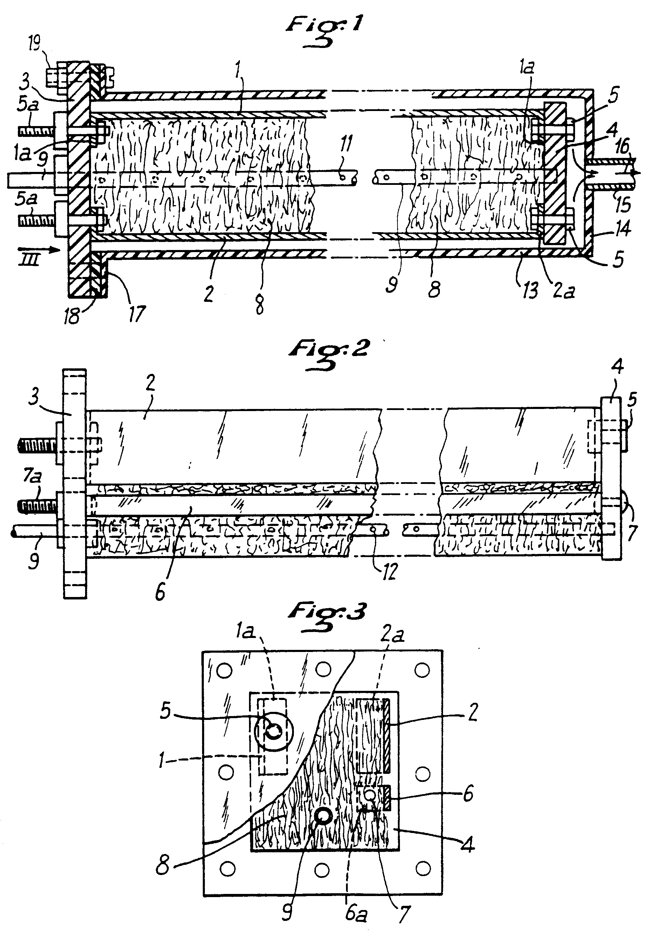

Le dispositif de vaporisation d'eau rapide qui est représenté sur les figures 1 à 3, comporte deux plaques longitudinales et verticales 1,2 formant électrodes d'amenée de courant, parallèles l'une à l'autre, en matériau conducteur de l'électricité, par exemple en cuivre. Chacune de ces électrodes d'amenée de courant 1,2 a une forme rectangulaire et elle se termine, à ses deux extrémités, par des ailes respectives 1a,2a repliées à l'équerre, au moyen desquelles elle est fixée sur deux flasques transversaux en matière isolante, à savoir un flasque gauche 3 et un flasque droit 4, au moyen de vis 5,5a traversant les flasques 3,4 et les ailes à l'équerre 1a,2a. Chacune des électrodes 1,2 peut avoir, par exemple, une largeur de 15mm, une longueur de 200mm et une épaisseur de 1,5mm. Les deux vis 5a assurant la fixation des électrodes 1,2 sur le flasque gauche sont prolongées vers l'extérieur pour constituer des bornes

Entre les deux flasques 3 et 4 et en dessous de l'une des électrodes d'amenée de courant, en l'occurrence de l'électrode 2, s'étend une électrode de détection 6, constituée par une barre en matériau conducteur de l'électricité, par exemple en cuivre, dont les extrémités 6a sont repliées à l'équerre et fixées sur les flasques 3 et 4 au moyen de vis 7,7a. La vis 7a qui assure la fixation de l'électrode de détection 6 sur le flasque gauche 3, est prolongée vers l'extérieur pour constituer une borne de liaison électrique.

L'électrode de détection 6 a la même longueur que les électrodes d'amenée de courant 1 et 2 c'est-à-dire 200mm, et elle peut avoir une largeur de 5mm et une épaisseur de 1,5mm.

Entre les électrodes 1,2 et 6 et les deux flasques 3 et 4 est logé un corps poreux 8, en laine de roche, de forme générale parallélépipédique par exemple. Ce corps poreux central 8 est préférablement constitué de laine de roche sous forme de matelas dont les diamètres des fibres le constituant sont compris principalement entre 1,5 et 5 micromètres tandis que la longueur de ces fibres va de 3 à 10mm. Ces fibres possèdent un liant permettant d'améliorer la montée de l'eau par capillarité (par exemple résine formo-phénolique représentant 2,4% de la masse volumique).

Le corps poreux 8 s'étend sur toute la longueur du dispositif, soit 200mm, entre les deux flasques 3 et 4, et il peut avoir une hauteur de 45 mm.

Dans la partie inférieure du dispositif s'étend un tube longitudinal 9 d'arrivée d'eau à vaporiser, qui traverse le flasque gauche 3 et se termine dans le flasque droit 4, son extrémité droite étant fermée dans ce flasque. Ce tube 9 de nom de "Teflon", est placé à une certaine distance, par exemple de 10mm, au-dessus de la partie basse du corps poreux 8. Le tube 9 est percé, dans sa partie supérieure, de trous 11, d'axes sensiblement verticaux, ayant par exemple un diamètre de 0,5 mm et espacés les uns des autres d'une distance de 15mm. Il est également percé de part en part, horizontalement , sur ses deux faces, de trous opposés 12 d'axes sensiblement horizontaux. Le tube 9 s'étend à travers un trou longitudinal ménagé à l'emplacement approprié dans la partie inférieure du corps poreux 8. Ce tube permet le remplissage en eau du corps poreux 8, entre deux cycles d'évaporation.

Le dispositif de vaporisation d'eau rapide suivant l'invention qui est représenté sur les figures 1 à 3, est complété par une enceinte parallélépipédique 13, entourant l'ensemble formé par les électrodes 1,2,6 les flasques 3,4 et le corps poreux 8, à une certaine distance de ceux-ci. Cette enceinte 13 est fermée, à son extrémité droite, par un flasque frontal 14 percé en son centre d'un trou auquel se raccorde un conduit 15 d'évacuation de la vapeur produite qui s'échappe comme il est indiqué par la flèche 16. A son extrémité gauche l'enceinte 13 comporte une collerette externe 17 qui est fixée sur le flasque gauche 3, avec interposition d'un joint isolant 18, au moyen de vis 19.

Lorsque les électrodes d'amenée de courant 1 et 2 sont alimentées en courant électrique, en raccordant les vis gauches 5a formant bornes aux deux pôles d'une source de courant électrique à tension constante, par exemple au secteur, le courant qui traverse le corps poreux 8, entre les deux électrodes 1,2, provoque un échauffement et une vaporisation de l'eau imprégnant le corps poreux 8. La vapeur produite sort de l'appareil par le conduit 15.

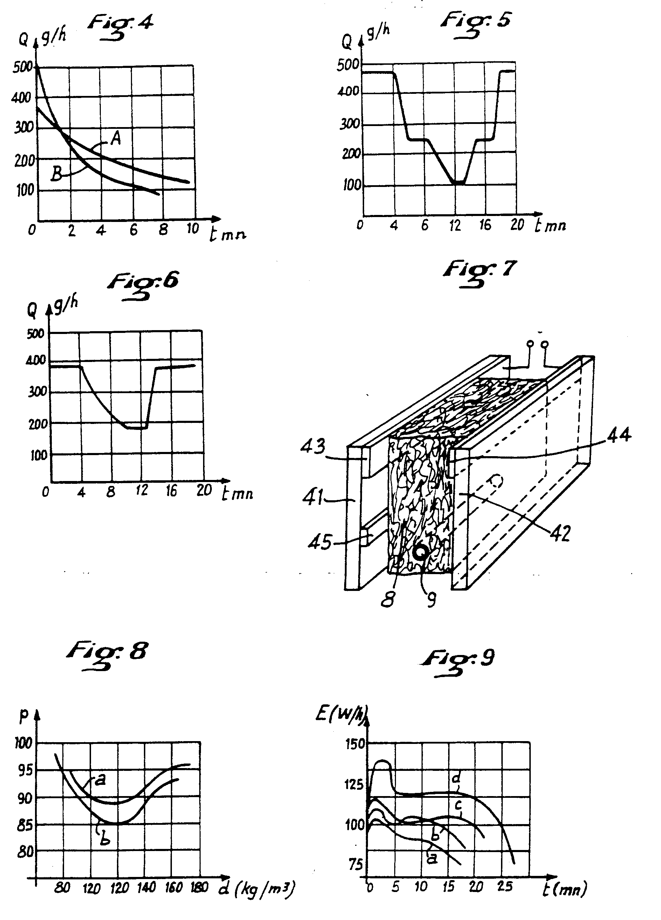

Les figures 4,5 et 6 représentent des diagrammes illustrant le fonctionnement du dispositif suivant l'invention dans diverses conditions.

Le diagramme de la figure 4 correspond au cas où le corps poreux est préalablement saturé d'eau, par injection de celle-ci au moyen du tube perforé 9, et où, suivant l'invention, il n'est plus ensuite rechargé. Sur ce diagramme, ainsi que sur les diagrammes de autres figures, le temps t est porté en abscisse (en minutes), tandis que le débit de vapeur Q (en g/h) est porté en ordonnée. Le diagramme de la figure 4 fait apparaître deux courbes A et B correspondant respectivement à des corps poreux ayant des densités différentes à savoir une densité de 115 kg/m3 pour la courbe B. On voit que le débit de vapeur produite va en diminuant dans le temps, plus rapidement dans le cas de la courbe A (corps poreux de faible densité) que dans le cas de la courbe B (corps poreux de forte densité).

Le diagramme de la figure 5 illustre une variation du débit de vapeur Q commandée en utilisant l'électrode de détection 6. A partir du courant capté par cette électrode de détection 6 et qui est fonction de l'état d'humidification du corps poreux, il est possible d'agir, par un système asservi, sur le courant électrique d'alimentation des électrodes d'amenée de courant 1 et 2, pour faire varier à volonté le débit de vapeur. La courbe du diagramme de la figure 5 correspond à un maintien d'un débit initial constant de vapeur de 480 g/h, puis à une diminution de ce débit de vapeur jusqu'à 250g/h, puis à un maintien à un palier de cette vapeur, puis à une baisse jusqu'à un palier de 100g/h, pour faire remonter ensuite le débit de vapeur, par paliers, jusqu'a 480g/h.

Le diagramme de la figure 6 illustre un autre cycle opératoire pour le dispositif suivant l'invention équipé d'un corps poreux ayant une densité de 115 kg/m3.

On peut remarquer, en comparant les diagrammes des figures 5 et 6, que, lorsqu'on diminue le débit de vapeur Q, on obtient des pentes différentes pour obtenir le régime établi à chaque palier, selon la densité du corps poreux 8 utilisé. Par contre, lorsqu'on augmente les débits de vapeur Q, les pentes en fonction du temps sont voisines.

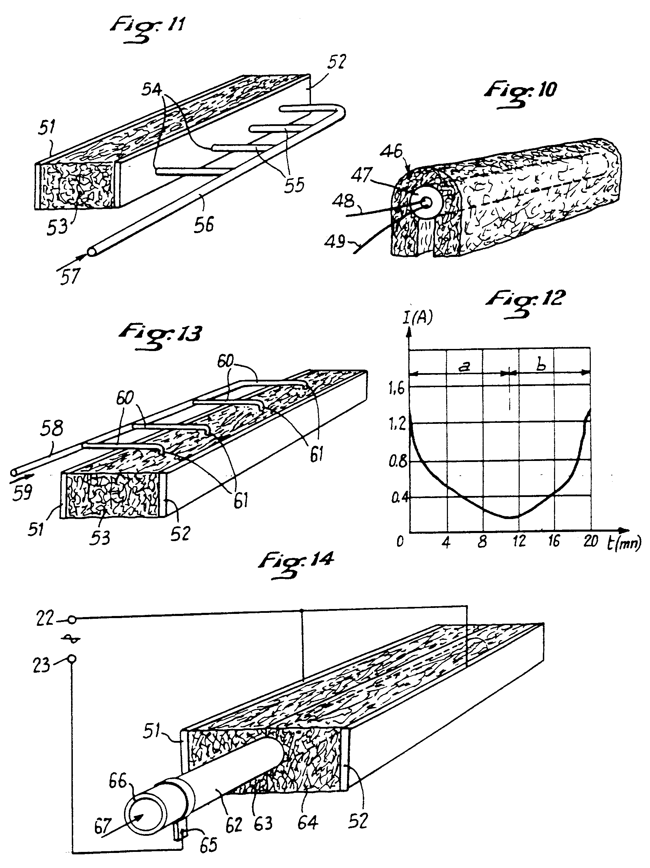

Dans la variante d'exécution de l'invention représentée sur la figure 7 le dispositif de vaporisation rapide d'un liquide suivant l'invention est réalisé sous une forme autonome, portative, pouvant être chargée avec une certaine quantité d'eau. Dans ce cas la masse de corps poreux 8, de forme parallélépipédique, est maintenue entre deux flasques verticaux et longitudinaux 41 et 42 en matières isolante. Chacun de ces flasques porte, à la partie supérieure de sa face interne, une électrode d'amenée de courant respective 43,44, constituée par une barre horizontale, en matière conductrice de l'électricité, maintenue en contact avec la partie supérieure du corps poreux central 8. Les électrodes d'amenée de courant 43,44 ont de préférence chacune une épaisseur de 1mm, une longueur de 80 mm et une hauteur de 10mm. Les deux flasques 41,42 sont maintenus parallèles l'un à l'autre à une distance de 30 mm et le corps poreux 8 a, par exemple, une hauteur de 60 mm, une largeur de 50 mm et une épaisseur de 30 mm, ce corps poreux étant légèrement comprimé entre les deux électrodes d'amenée de courant 43,44.

Les diagrammes des figures 8 et 9 illustrent l'intéret et les possibilités offertes par le dispositif de la figure 7.

Le diagramme de la figure 8 illustre la variation du pourcentage p d'eau contenue à saturation dans le corps poreux, porté en ordonnée, en fonction de la densité du corps poreux, en kg/m3, portée en abscisse. Les courbes a et b illustrent les cas de deux corps poreux 8 réalisés à partir de fibres de densités différentes.

Le diagramme de la figure 9 illustre la variation de l'énergie dissipée E, exprimée en W/h, en fonction du temps t, exprimé en minutes, lorsqu'on vaporise l'eau contenue à saturation dans le corps poreux 8 par le passage d'un courant électrique alternatif en appliquant une tension constante de 220 volts entre les deux électrodes 43 et 44, compte tenu d'une résistivité de l'eau de 1.500 ohms/cm, et que l'on épuise ladite quantité d'eau pendant toute une période. Quatre courbes de variations de l'énergie dissipée a,b,c,d sont tracées sur le diagramme de la figure 11, ces courbes correspondant respectivement à des corps poreux ayant des densités de 70 kg/m3, 100 kg/m3, 120 kg/m3 et 140 kg/m3. On voit par exemple que pour une densité de 140 kg/m3 l'énergie dissipée est pratiquement constante pendant 20 minutes, tandis que pour une densité de 70 kg/m3 l'énergie dissipée diminue sans cesse pendant 20 minutes. Ce type de dispositif peut être équipé d'une électrode de détection supplémentaire 45, analogue à l'électrode de détection 6. Cette électrode de détection 45 est fixée sur la face interne de l'un des flasques 41 et elle s'étend longitudinalement en dessous de l'électrode d'amenée de courant 43 portée par le flasque 41. L'électrode de détection 45 permet de connaître la résistance que mesurant le courant électrique le traversant en provenance de l'électrode opposée 44. On peut ainsi réalimenter en eau, de façon automatique ou manuelle, le dispositif dès qu'il atteint un seuil de déshydratation préétabli, l'arrivée d'eau étant stoppée dès qu'un taux prédéterminé d'hydratation du corps poreux 8 est atteint. L'injection de l'eau de réalimentation peut se faire directement dans le corps poreux 8, au moyen du tube perforé 9 s'étendant longitudinalement dans la partie inférieure du corps poreux 8, ou bien par remplissage ou trempage dans une masse d'eau.

Le dispositif représenté sur la figure 7 constitue un évaporateur dans lequel on stocke une quantité d'eau pour obtenir une autonomie de fonctionnement entre deux appels de réapprovisionnement, et qui peut être utilisé dans toutes les positions, tout en présentant une grande rapidité d'obtention de vapeur. Ce dispositif peut être aisément rechargé en eau, lorsque le besoin s'en fait sentir, en introduisant cette eau, en provenance d'une source quelconque (par exemple robinet), à travers un orifice de recharge approprié prévu dans l'enveloppe externe.

Par ailleurs le dispositif représenté sur la figure 7 se prête particulièrement bien au changement du corps poreux interne, pour permettre l'emploi d'un corps poreux ayant une densité choisie, de manière à obtenir une variation de l'énergie dissipée dans le temps suivant une loi désirée telle que par exemple l'une des courbes a,b,c,d de la figure 9.

Dans la variante d'exécution de l'invention représentée sur la figure 10, le dispositif comporte un corps poreux allongé 46, en un seul bloc ou en deux parties accolées, dont la surface supérieure duquel s'étend longitudinalement une resistance de chauffage électrique 47 reliée par des conducteurs 48 et 49 à une source de courant électrique appropriée. Ce corps poreux 46 peut être approvisionné en eau, avant utilisation, par n'importe lequel des moyens décrits, notamment par projection, injection interne par un tube, trempage, pompage par une mèche et.... On peut par ailleurs faire varier le débit de vapeur en faisant varier corrélativement la puissance de chauffage fournie, par hachage du courant par exemple.

Dans la variante d'exécution de l'invention représentée sur la figure 11 on injecte, avant vaporisation, l'eau à vaporiser directement dans le dispositif de vaporisation par des canalisations traversant l'une des deux électrodes. Le dispositif représenté sur la figure 11 comprend deux plaques verticales en cuivre 51,52, parallèles et en regard l'une de l'autre, constituant des électrodes, ayant chacune une longueur de 100 mm, une hauteur de 20 mm et une épaisseur de 1mm par exemple. Entre ces électrodes 51,52 est comprimé un corps poreux parallélépipédique 53 ayant une hauteur de 20 mm. Ce corps poreux est constitué de fibres de laine de roche courtes ayant principalement une longueur de 5 à 10mm, et un diamètre de 2 à 5 micromètres, ces fibres étant enchevêtrées en présentant une stratification maintenue par un liant favorisant la montée capillaire. Ce liant est une résine formo-phénolique représentant 2,4% de masse volumique. Ce corps poreux présente à l'origine, sous forme de matelas, une densité de 80 kg/m3, avec une tolérance de ± 10%, qui, après compression entre les électrodes 51,52 équivaut à 200 kg/m3. L'électrode 52 est percée de quatre trous 54, d'un diamètre de 4,5 mm par exemple, alignés suivant entre eux de 20 mm. Dans les trous 54 pénètrent quatre tubes 55, d'un diamètre intérieur de 2mm et extérieur de 4 mm, pour se loger sur 3 millimètres de profondeur dans le corps poreux 53. Ces quatre tubes 55 sont réunis à un collecteur d'eau 56 qui reçoit l'eau d'alimentation comme il est indiqué par la flèche 57.

Le diagramme de la figure 12 correspond au cas où le corps poreux 53 est préalablement saturé d'eau tout comme dans le cas du dispositif de la figure 1. On peut observer, dans ce cas, une diminution progressive de l'intensité du courant électrique, donc du débit de vapeur, parvenant au 10ème du débit de la vapeur à l'instant initial, au bout de 9 minutes pendant la première période a, pour remonter progressivement à la 18ème minutes, puis rapidement jusqu'à la 20ème minute de la seconde période b, temps pendant lequel on fait varier la pression une seconde fois à 18 minutes.

Dans la variante d'exécution de l'invention représentée sur la figure 13 on injecte le liquide à vaporiser par un goutte-à-goutte répandant le liquide sur la surface supérieure du corps poreux 53. Ce genre de dispositif est de même conception que l'élément de vaporisation représenté sur la figure 1 aussi bien pour le corps poreux que pour les électrodes qui n'ont aucun perçage. Le goutte-à-goutte se compose d'un tube collecteur longitudinal d'amenée d'eau 58 qui est alimenté en eau suivant la flèche 59. A ce tube collecteur longitudinal 58 sont soudés quatre tubes transversaux 60 qui s'étendent au-dessus du corps poreux 53. L'extrémité ouverte 61 de chaque tube 60 est munie d'un dispositif possédant une bille rainurée pour le passage de l'eau qui tombe sur la surface supérieure du corps poreux 53. Ce remplissage du corps poreux 53 une saturation maximum en liquide de celui-ci.

Dans la variante d'exécution de l'invention représentée sur la figure 14 le remplissage du corps poreux s'effectue en injectant l'eau à vaporiser au travers d'une paroi d'une électrode tubulaire poreuse et conductrice de l'électricité. Le dispositif représenté sur la figure 14 comprend les électrodes parallèles longitudinales 51 et 52 en cuivre. A mi-distance de ces électrodes 51 et 52 s'étend longitudinalement une électrode poreuse 62, par exemple en graphite, ayant un diamètre extérieur de 12mm et intérieur de 8mm, et dont la paroi présente une porosité de 10 micromètres permettant à l'eau de diffuser au travers de cette paroi pour remplir des corps poreux 63,64 et les recharger en eau progressivement. La disposition de l'électrode, au centre du corps poreux 63,64, ainsi que la progressivité de l'arrivée d'eau permettent d'obtenir un taux de remplissage en eau du corps poreux optimum. Bien entendu l'électrode 62 peut être de section droite quelconque, circulaire, rectangulaire, etc. et elle peut être constituée d'une matière frittée conductrice de l'électricité quelconque, par exemple, en cuivre ou en acier inoxydable. Le dispositif est alimenté en tension alternative de 220 volts par un pôle 23 du secteur qui est branché à un collier métallique 65 fixé étroitement à l'électrode tubulaire 62, tandis que l'autre pôle 22 du secteur est connecté aux deux électrodes 51 et 52 qui sont montées en parallèle. On peut associer pu accoler plusieurs électrodes poreuses, telles que l'électrode 62, et des électrodes non poreuses, pour former un élément compact de vaporisation. Dans le montage de branchement d'alimentation de l'eau on doit tenir compte de la résistivité de l'eau dans le but d'obtenir une résistance apparente la plus faible possible en regard des tensions d'alimentation électrique, tout en nécessitant un tube d'alimentation en eau en matière isolante que l'on branche à l'extrémité 66 de l'électrode 62, pour que l'eau pénètre dans cette électrode suivant la flèche 67.

## Revendications

1. Dispositif de vaporisation rapide d'un volume d'eau stocké dans un corps poreux (8,46,53,63,64) constitué de laine de roche, comportant des moyens de chauffage électrique (1,2,43,44,47,51,52) sous tension constante d'une quantité donnée de l'eau contenue dans le corps poreux (8,46,53,63,64), aptes à provoquer sa vaporisation, caractérisé en ce que le diamètre des fibres constituant le corps poreux est compris entre 1,5µm et 5µm, la densité du corps poreux étant comprise entre 120 kg/m³ et 140 kg/m³.

2. Dispositif suivant la revendication 1 caractérisé en ce que les moyens de chauffage de l'eau contenue dans le corps poreux fibreux (8,46,53,63,64) sont constitués d'au moins deux électrodes conductrices (1,2,43,44,51,52), alimentées en courant électrique, et qui sont en contact avec ledit corps poreux fibreux (8,46,53,63,64).

3. Dispositif suivant la revendication 1 caractérisé en ce que les moyens de chauffage de l'eau contenue dans le corps poreux fibreux (8,46,53,63,64) sont constitués d'au moins une résistance (47), alimentée en courant électrique, qui est en contact avec ledit corps poreux fibreux (8,46,53,63,64).

## Claims

1. Device for fast evaporation of a volume of water stored in a porous body (8, 46, 53, 63, 64) constituted by rock wool, comprising electrical means (1, 2, 43, 44, 47, 51, 52) under constant voltage for heating a given quantity of the water contained in the porous body (8, 46, 53, 63, 64), adapted to provoke evaporation thereof, characterized in that the diameter of the fibers constituting the porous body is included between 1.5µm and 5µm, the density of the porous body being included between 120 kg/m³ and 140 kg/m³.

2. Device according to Claim 1, characterized in that the means for heating the water contained in the fibrous porous body (8, 46, 53, 63, 64) are constituted by at least two conductive electrodes (1, 2, 43, 44, 51, 52), supplied with electric current, and which are in contact with said fibrous porous body (8, 46, 53, 63, 64).

3. Device according to Claim 1, characterized in that the means for heating the water contained in the fibrous porous body (8, 46, 53, 63, 64) are constituted by at least one resistor (47) supplied with electric current, which is in contact with said fibrous porous body (8, 46, 53, 63, 64).

## Patentansprüche

1. Vorrichtung zur schnellen Verdampfung eines Wasservolumens, das in einen porösen, aus Steinwolle bestehenden Körper (8, 46, 53, 63, 64) eingelagert ist, mit Einrichtungen (1, 2, 43, 44, 47, 51, 52), welche unter konstanter Spannung eine gegebene, im porösen Körper (8, 46, 53, 63, 64) enthaltene Wassermenge elektrisch erhitzen und welche geeignet sind, deren Verdampfung zu bewirken, **dadurch gekennzeichnet, daß** der Durchmesser der den porösen Körper bildenden Fasern zwischen 1.5 µm und 5 µm liegt, wobei die Dichte des porösen Körpers zwischen 120 kg/m³ und 140 kg/m³ liegt.

2. Vorrichtung nach Anspruch 1, dadurch gekennzeichnet, daß die Einrichtungen zur Erhitzung des im porösen Körper (8, 46, 53, 63, 64) enthaltenen Wassers aus mindestens zwei Leiterelektroden (1, 2, 43, 44, 51, 52) bestehen, die mit elektrischem Strom versorgt werden und die mit dem porösen, faserartigen Körper (8, 46, 53, 63, 64) in Kontakt sind.

3. Vorrichtung nach Anspruch 1, dadurch gekennzeichnet, daß die Einrichtungen zur Erhitzung des im porösen, faserartigen Körper (8, 46, 53, 63, 64) enthaltenen Wassers aus mindestens einem mit elektrischem Strom versorgten Widerstand (47) bestehen, der in Kontakt mit dem porösen, faserartigen Körper (8, 46, 53, 63, 64) ist.
